# EUROPÄISCHE PATENTANMELDUNG

(11) **EP 4 628 189 A1**
(43) Veröffentlichungstag der Anmeldung: **08.10.2025**
(21) Anmeldenummer: 25161833.6
(22) Anmeldetag: 05.03.2025
(51) Int. Cl.: B01D 45/08

(54) **FILTERMODUL ZUR ABSCHEIDUNG VON LACK- UND/ODER FARBRESTEN, INSBESONDERE VON OVERSPRAY IN EINER LACKIERKABINE**

(30) Priorität: 05.04.2024 DE 102024109555
(71) Anmelder: Innovative Paint & Conveyor Systems S.L.,, 08550 Gavá, Barcelona (ES)
(72) Erfinder: KNAUS, Uwe, 75228 Ispringen (DE)
(74) Vertreter: Kleine, Hubertus

(57) **Zusammenfassung**

Ein Filtermodul (1) zur Abscheidung von Lack- und/oder Farbresten, insbesondere von Overspray in einer Lackierkabine mit einer in einem Gehäusekasten (7) angeordneten Zuströmöffnung (2) und einer Abströmöffnung und einer im Gehäusekasten (7) angeordneten Filteranordnung (4) umfassend eine Mehrzahl von Filterelementen (6) zur Abscheidung der Lack- und/oder Farbresten dadurch gekennzeichnet, dass eines oder mehrere der Filterelemente (6) einen säulenförmigen oder rinnenförmigen Stützkorpus (7) und ein Abscheidemedium (16, 26, 36, 46) aufweist, wobei das Abscheidemedium (16, 26, 36, 46) kraft- und/oder formschlüssig am Stützkorpus (7) festgelegt ist.

## Beschreibung

Die vorliegende Erfindung betrifft ein Filtermodul zur Abscheidung von Lack- und/oder Farbresten, insbesondere von Overspray in einer Lackierkabine.

Die EP 2 236 215 A1 offenbart insbesondere in Fig. 4 eine Filteranordnung aus mehreren halbschalenförmigen Rinnen, welche in Zuströmrichtung reihenweise versetzt zueinander angeordnet sind.

Nachteilig daran ist die vergleichsweise glatte Oberfläche der Rinnen, die nur eine geringe Abscheidung von Farbresten und Lacken oder anderem Overspray ermöglicht.

Die vorliegende Erfindung setzt ausgehend von der Vorbetrachtung des Standes der Technik bei Aufgabe an ein Filtermodul mit erhöhter Filterkapazität zur Aufnahme von gefilterten Lack- und/oder Farbresten bereitzustellen, deren Oberfläche in Abhängigkeit vom abzuscheidenden Overspray individuell auswählbar ist.

Weiterer Stand der Technik auf dem Gebiet ergibt sich aus der DE 10 2021 125 413 A1, aus der DE 10 2017 103 794 und aus der DE 10 2022 125 704 A1.

Die vorliegende Erfindung löst diese Aufgabe durch ein Filtermodul mit den Merkmalen des Anspruchs 1.

Ein erfindungsgemäßes Filtermodul dient zur Abscheidung von Lack- und/oder Farbresten, insbesondere von Overspray in einer Lackierkabine. Es verfügt über eine Anströmseite und eine Ausströmseite bzw. Abströmseite und dient der Abscheidung der Lack- und/oder Farbresten in seinem Inneren. Es dient zumeist als Vorfilter und kann in einer Abscheidevorrichtung mit anderen Filtern, z.B. einem Feinfilter und/oder einem Hauptfilter kombiniert werden.

Das Filtermodul weist einen Gehäusekasten mit einer Zuströmöffnung und einer Abströmöffnung und einer im Gehäusekasten angeordneten Filteranordnung auf. Die Filteranordnung umfasst eine Mehrzahl, also zumindest zwei oder mehr, Filterelemente zur Abscheidung von Lack- und/oder Farbresten, insbesondere von Overspray in einer Lackierkabine, auf.

Erfindungsgemäß weist eines oder mehrere der Filterelemente einen säulenförmigen oder rinnenförmigen Stützkorpus und ein Abscheidemedium auf.

Typischerweise erfolgt die Festlegung eines Abscheidemediums auf gebogenen bzw. nicht-ebenen Flachen stoffschlüssig, z.B. durch Kleben oder Schweißen, da es andernfalls zu einem Hinterströmen des Abscheidemediums kommen kann.

In der vorliegenden Erfindung ist das Abscheidemedium kraft- und/oder formschlüssig am Stützkorpus festgelegt, so dass das Filtermodul, durch Vernichtung, z.B. Pyrolyse, oder Austausch des Abscheidemediums ohne größeren Aufwand erneuert werden kann.

Der Stützkorpus und die restlichen Teile des Filtermoduls sind somit nach bestimmungsgemäßer Entsorgung des Abscheidemediums wiederverwendbar. Ein solches Vorgehen ist bei ebenen Flächenfiltern wie Taschenfiltern bereits teilweise bekannt. Die form- oder kraftschlüssige Festlegung eines Abscheide-mediums auf säulen- oder rinnenförmigen Filterelementen erlaubt zudem eine Abstimmung des Vorfilters auf die Art des verwendeten Oversprays beim nächsten Filtervorgang unter zeitgleicher Wiederverwendung von einem Großteil des Filtermoduls. Dies reduziert anfallenden Abfall im erheblichen Maße.

Die Abscheideoberfläche des Abscheidemediums ist mit der ersten Vielzahl aus zumindest 20, vorzugsweise mehr als 40, nebeneinander angeordneten Zellen als formgleiche Zellen, vorzugsweise mit jeweils gleich großen Hohlräumen, ausgebildet.

Dabei sind die Zellen unmittelbar benachbart zueinander angeordnet und mit einer Zellwand von kleiner als 2 mm, vorzugsweise kleiner als 1 mm, voneinander getrennt. Es versteht sich, dass bei ungleichmäßig geformten Zellwänden, z.B. bei Löchern, sich die Trennung auf den geringsten Abstand der beiden Löcher bezieht. Diese hohe Lochdichte erhöht den Abscheidungsgrad zusätzlich.

Bei anderen Varianten von Zellen, z.B. Wabenplatten nach Art einer Bienenwabe, ist der Abstand der Löcher an jeder Position gleich groß. Es liegt eine einheitliche Stärke der Zellwand vor. Der Vorteil der hohen Lochdichte ergibt sich in analoger Art und Weise.

Weitere vorteilhafte Ausgestaltungen der Erfindung sind Gegenstand der Unteransprüche.

So kann eines oder mehrere der Filterelemente, vorzugsweise alle Filterelemente, ein Abscheidemedium mit zumindest bereichsweise einer Abscheideoberfläche mit einer Vielzahl aus Zellen aufweisen, welche in Form von Hohlräumen ausgebildet sind. Als Vielzahl werden im Rahmen der vorliegenden Anmeldung mehr als 20, vorzugsweise mehr als 40 Zellen verstanden.

Die Hohlräume erlauben die Aufnahmekapazität für Farb- und Lackreste durch das jeweilige Filterelement in erheblichem Maße.

Das Abscheidemedium kann vorteilhaft austauschbar am Stützkorpus festgelegt sein. Eine Austauschbarkeit ermöglicht nicht nur einen Austausch per se, sondern auch eine vereinfachte erneute Bereitstellung, sofern ein beladenes Abscheidemedium z.B. durch Pyrolyse, vernichtet wurde. Meist verbleiben bei stoffschlüssiger Verbindung Überreste des Abscheidemediums auf der Oberfläche, während sie bei einer austauschbaren Halterung typischerweise während der Pyrolyse von der Oberfläche des Stützkörpers abfallen.

Besonders vorteilhaft für eine einfache Handhabung ist es, wenn das Abscheidemedium durch eines oder mehrere Haltemittel am Stützkorpus verklemmt angeordnet ist. Hier kann das Haltemittel z.B. aufgebogen und nach dem Einsetzen des Abscheidemediums wieder zurückgebogen werden. Es ist auch möglich das Abscheidemedium über den Stützkorpus aufzuspannen. Dies kann z.B. analog zu einem Spannbettlaken erfolgen. Entsprechende elastische Spannmittel, wie z.B. ein randseitig-umlaufender oder rein rückseitig quer verlaufender Gummizug oder andere elastische Zugmittel zum Aufspannen können bei dieser Variante vorgesehen sein. Auch ein randseitig am Abscheidemedium angebrachter Keder und eine am Stützkorpus angeordnete korrespondierende Kedernut kann zum Aufspannen des Abscheidemediums über den Stützkorpus genutzt werden.

Das oder die Haltemittel können überdies durch mechanische Fixationsmittel und/oder durch stoffschlüssige Verbindung als Teil des Stützkorpus ausgebildet sein. Die Haltemittel sind durch die vorgenannten Varianten am übrigen Teil des Stützkorpus fest fixiert.

Alternativ kann das oder die Haltemittel am Abscheidemedium als Teil des Abscheidemediums ausgebildet sein. Die Verbindung mit dem übrigen Abscheidemedium kann stoffschlüssig sein, es kann allerdings z.B. auch eine eingenähte Variante oder eine durch mechanische Fixierungsmittel festgelegte Möglichkeit zur Fixierung der Haltemittel am übrigen Abscheidemedium in Betracht kommen.

Die Zellen der Abscheideoberfläche des Abscheidemediums können vorteilhaft mit einer Bodenfläche abgeschlossen sein und somit quasi als Sackloch ausgebildet sein.

Im Filtermodul können überdies entlang einer Ebene parallel zur Ebene der Zuströmöffnung mehrere der Filterelemente nebeneinander angeordnet sein.

Im Filtermodul können überdies in Hauptzuströmrichtung, also senkrecht zu der Ebene der Zuströmöffnung, mehrere der Filterelemente hintereinander angeordnet sein.

Sofern die Abscheideoberfläche des Abscheidemediums Zellen aufweist, so können diese bevorzugt eine durchschnittliche Zelltiefe, also einen durchschnittlichen Abstand zwischen Zellrand bis zur Bodenfläche, von mehr als 1 mm, vorzugsweise mehr als 2 mm, besonders bevorzugt 2,3 - 20 mm, aufweisen.

Besonders bevorzugt wird das Abscheidemedium in einem Zwischenraum zwischen einer Klemmfläche eines Haltemittels und einer Oberfläche des Stützkorpus klemmend gehalten.

Vorteilhaft für eine gute Ökobilanz kann der Stützkorpus aus Metall ausgebildet sein, so dass dieser auch nach einer Pyrolyse wiederverwendbar ist.

Das Abscheidemedium kann vorteilhaft aus einem pyrolysierbaren Material, insbesondere aus einem faserhaltigen Material und/oder Cellulosematerial, ausgebildet sein.

Alternativ kann das Abscheidemedium allerdings auch aus einem pyrolysefesten Material, vorzugsweise aus einem Metall, besonders bevorzugt aus Stahlblech, gefertigt sein. Hier ist der Vorteil eher in einem schnellen und unkomplizierten Austausch zu sehen. Das Abscheidemedium kann individuell pyrolysegereinigt werden, während der nur gering beladene Stützkörper bzw. das gesamte restliche Filtermodul sofort wiederverwendbar ist. Dies verringert den Reinigungsaufwand und sorgt durch Ausbau des Abscheidemediums für eine optimale Erreichbarkeit der zu reinigenden Oberflächen durch den heißen Luftstrom.

Weitere Vorteile, Merkmale und Einzelheiten der Erfindung ergeben sich aus der nachfolgenden Beschreibung, in der ein Ausführungsbeispiel der Erfindung anhand der beiliegenden Zeichnungen näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Insbesondere gibt es eine Vielzahl von Möglichkeiten im Detail näher erläutert.

Das nachfolgende Beispiel zeigt:
- Fig. 1: Perspektivansicht einer erfindungsgemäßen Variante eines Filtermoduls ohne entsprechendes Abscheidemedium;
- Fig. 2: Perspektivansicht eines Stützkorpus des Filtermoduls der Fig. 1;
- Fig. 3: Perspektivansicht einer ersten Variante eines Filterelements zum Einsatz in einem erfindungsgemäßen Filtermodul;
- Fig. 4: Perspektivansicht einer zweiten Variante eines Filterelements zum Einsatz in einem erfindungsgemäßen Filtermodul;
- Fig. 5: Perspektivansicht einer dritten Variante eines Filterelements zum Einsatz in einem erfindungsgemäßen Filtermodul; und
- Fig. 6: Perspektivansicht einer vierten Variante eines Filterelements zum Einsatz in einem erfindungsgemäßen Filtermodul.

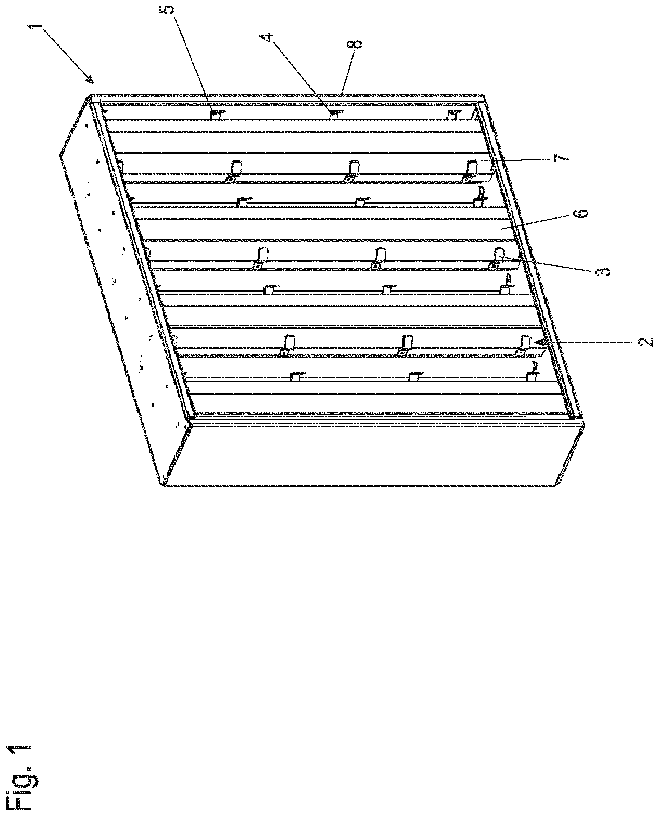

Fig. 1 zeigt ein Filtermodul 1, welches als Vorfilter in einer Anlage zur Lackabscheidung ausgebildet ist. Die Anlage kann weitere Filtermodule als Feinfilter bzw. Hauptfilter aufweisen.

Das Filtermodul 1 weist einen rahmenförmigen Gehäusekasten 8 mit einer Zuströmöffnung 2 auf, durch welche mit Lack- und Farbresten beladene Luft, sogenanntes Overspray, in den Gehäusekasten 8 geleitet wird.

Die rückseitige Abströmöffnung ist in Fig. 1 nicht dargestellt. Die Zuströmöffnung 2 definiert eine Einlassebene.

In dem Gehäusekasten 8 sind eine Vielzahl, vorzugsweise mehr als 4, besonders bevorzugt zwischen 6-20 Filterelemente 6, 7 angeordnet. In Fig. 1 sind die Filterelemente 6, 7 ohne Abscheidemedium angeordnet. Insofern ist das Filtermodul 1 in Fig. 1 noch nicht vollständig dargestellt.

Das Filterelement 6 umfasst neben dem Abscheidemedium auch einen Stützkorpus 7. Dieser ist säulenförmig oder rinnenförmig ausgebildet.

Ein säulenförmiger Stützkorpus 7 kann beispielsweise als eine Hohlsäule ausgebildet sein. Die Mantelfläche des säulenförmigen Stützkorpus kann vorzugsweise prismatisch ausgebildet sein, z.B. als dreieckiges, viereckiges, sechseckiges oder beliebiges anderes Prisma. Dadurch ist der Stützkorpus einfach fertigbar.

Ein rinnenförmiger Stützkorpus 7 kann beispielsweise als eine längshalbierte prismatische Hohlsäule ausgebildet sein.

Sowohl für die Säulenform als auch für die Rinnenform kommen grundsätzlich auch zylindrische bzw. teilzylindrische Außenflächen in Betracht. Diese sind allerdings schwerer zu fertigen und daher gegenüber Säulen- oder Rinnenformen mit mehrfach abgewinkelten Flächen weniger bevorzugt.

Die Mantelfläche kann eine geschlossene Fläche sein oder als ein Gitter ausgebildet sein. Im Fall eines Gitters kann der Stützkorpus zusätzlich mit einem Fasermaterial, wie z.B. Watte, Zellulose wie Holzfasern oder Baumwolle, und dergleichen gefüllt sein.

Bevorzugt ist die Mantelfläche des Stützkorpus 7 eine geschlossene Fläche, da hierdurch eine bessere Stützwirkung für das Abscheidemedium erreicht wird.

Eine Anzahl an Filterelemente 6 sind bei gleicher räumlicher Ausrichtung nebeneinander in einer ersten Reihe angeordnet. Im Fall der Fig. 1, in welcher die Filterelemente 6 als Rinnen ausgebildet sind, ist jeweils die konvexe Seite nach außen gerichtet, so dass zugeführtes Overspray auf die konvexe Unterseite der Rinne trifft und sich teilweise dort abscheidet und teilweise in Zwischenräume zwischen den Rinnen der ersten Reihe geleitet wird.

Hinter der ersten Reihe ist eine zweite Reihe an Filterelementen 6 angeordnet, welche speziell in der Ausgestaltung als Rinne mit ihrer konkaven Innenseite in Anströmrichtung ausgerichtet sind. Somit sind die Rinnen der zweiten Reihe umgekehrt und versetzt ausgerichtet zu den Rinnen der ersten Reihe. Der Versatz ist derart, dass das in die Zwischenräume zwischen den Rinnen der ersten Reihe umgeleitete Overspray mittig auf die konkaven Innenseiten der Rinnen der zweiten Reihe trifft und dort ebenfalls teilweise abgeschieden wird.

Die jeweilige erste Reihe und zweite Reihe ist vorteilhaft parallel zur vorgenannten Einlassebene ausgerichtet.

Zumindest die Filterelemente 6, insbesondere die Stützkörper, der ersten Reihe weisen außenseitig Haltemittel 3, 4, 5, 9 auf, welche bevorzugt an verschiedenen Positionen in Richtung der Längserstreckung des Filterelements angeordnet sind. Bevorzugt sind die Haltemittel zueinander parallel ausgerichtet.

Die Filterelemente 6 einer Reihe, einschließlich derer Haltemittel, sind vorzugsweise identisch angeordnet. Dies hat u.a. den Vorteil einer Fertigung mit geringer Teileanzahl bei gleichzeitig geringer Ausschussrate.

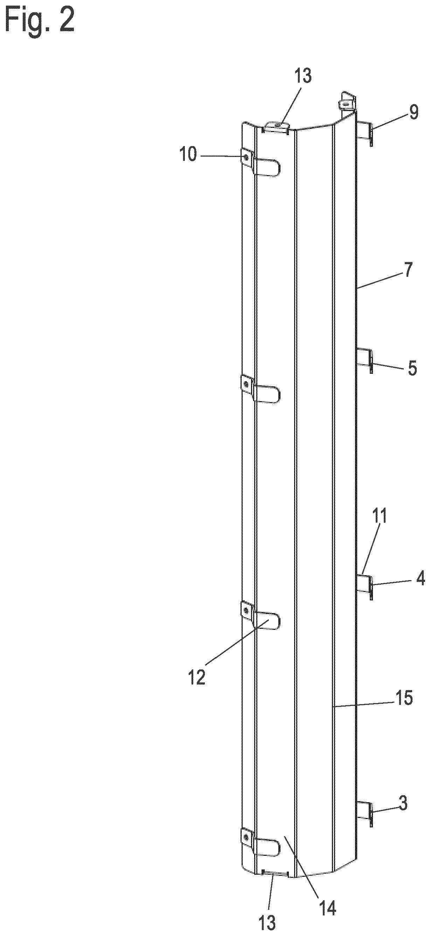

Die Haltemittel sind in Fig. 1 als Rastnasen ausgebildet, welche im Detail im Kontext mit dem in Fig. 2 dargestellten Stützkorpus näher beschrieben werden.

Der Stützkorpus 7 weist eine oder mehrere nebeneinander angeordnete Anlagenflächen 14 auf. Bei mehreren Anlagenflächen 14 sind diese über Knickstellen 15 miteinander verbunden.

Man erkennt mehrere Haltemittel 3, 4, 5 und 9 entlang der Längserstreckung des Filterelements 6 bzw. 7.

Das Haltemittel 3-5 und 9 weisen eine Auflagefläche 10 mit einer Fixierung, vorzugsweise einer Punktverschweißung und/oder einem mechanischen Fixierungsmittel, z.B. einer Schraube oder einer Niete, auf.

Im Anschluss an die Auflagefläche 10 weist das Haltemittel eine gegenüber der Auflagefläche 10 abgewinkelte Verbindungsfläche 11 auf. Die Verbindungsfläche 11 kann sich bereits zur Verklemmung über die Anlagefläche 14 erstrecken.

In Fig. 2 ist allerdings die Verbindungsfläche 11 mit einer endständigen Klemmfläche 12 verbunden, welche sich über die Anlagenfläche 14 erstreckt.

Endständig weist der Stützkorpus 7 Verbindungslaschen 13 auf, über welche der Stützkorpus mittelbar oder unmittelbar am Gehäusekasten 8 fixierbar ist. Die Verbindungslaschen 13 sind um 90° +/- 2° gegenüber Längserstreckung des Stützkorpus 7, und besonders bevorzugt gegenüber der Anlagefläche 14 des Stützkorpus 7, abgewinkelt.

Die mittelbare Fixierung mehrerer Filterelemente 6 kann durch eine nicht-dargestellte Verbindungsplatte erfolgen, welche gesamtheitlich mit den Filterelementen 6 in den Gehäusekasten eingesetzt wird.

Es ist allerdings auch möglich die Filterelemente 6 direkt am Gehäusekasten 8 zu fixieren.

Die Fixierung kann durch materialschlüssig, z.B. durch Schweißen, erfolgen oder durch mechanische Fixierungsmittel, wie z.B. Schrauben, Nieten und dergleichen.

Nicht in Fig. 2 dargestellt sind die Haltemittel für die zweite Reihe an Filterelementen 6. Hier wird das Abscheidemedium nicht an den konvexen Außenseiten, sondern an den konkaven Innenseiten der rinnenförmigen Filterelemente 6 angeordnet. Hier kann das Haltemittel als ein randseitiger Vorsprung ausgebildet sein, welcher sich als Anschlag von einer Kante des Filterelements 6 nach radial innen erstreckt. Sofern das Abscheidemedium eine gewisse Flexibilität bzw. ein Rückstellverhalten aufweist, so kann das Abscheidemedium gebogen und in den konvexen Innenbereich des Filterelements angeordnet werden. Durch die Rückstellkräfte stößt das Abscheidemedium gegen den randseitigen Vorsprung und liegt somit klemmend in dem rinnenförmigen Filterelement 6 ein.

Alternativ können, z.B. bei biegeschlaffen Abscheidemedien, analog zu Fig. 2 geformte Haltemittel randseitig an der konkaven Innenseite eines Filterelements der zweiten Reihe angeordnet sein, so dass das Abscheidemedium durch die besagten Haltemittel verklemmbar ist.

Durch die Haltemittel sind, z.B. in Abhängigkeit von der Oversprayzusammensetzung, verschiedene Abscheidemedien an den Stützkörpern anordenbar.

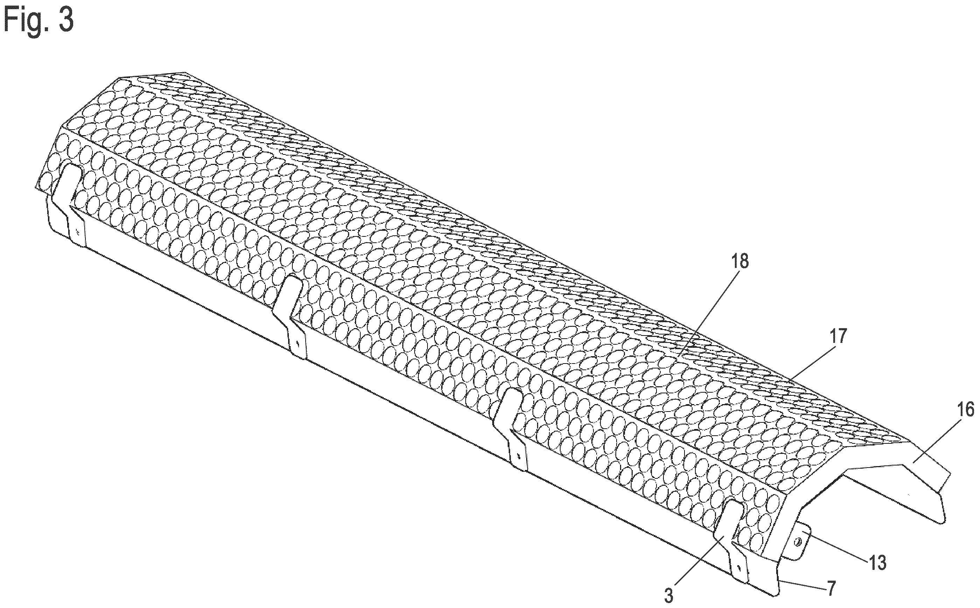

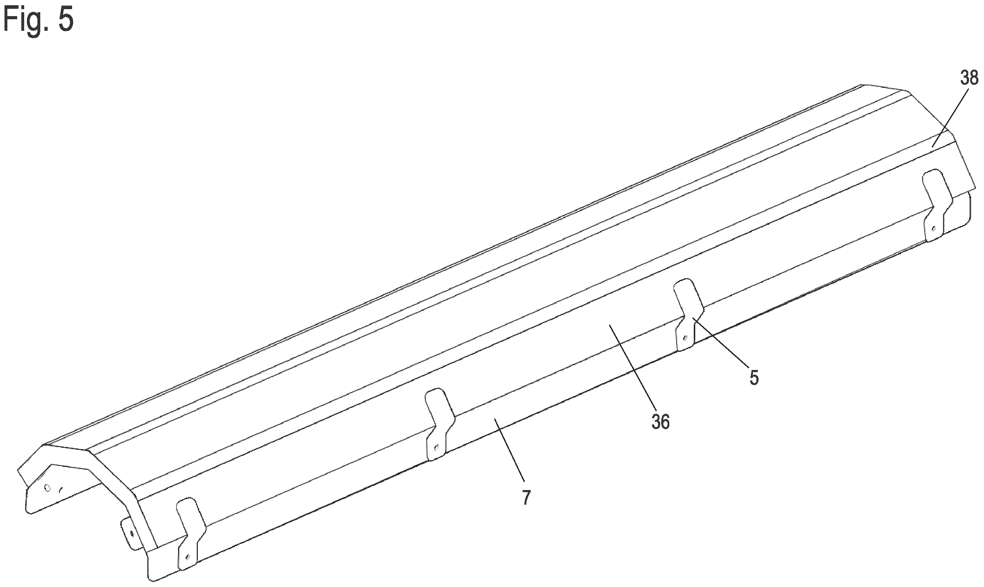

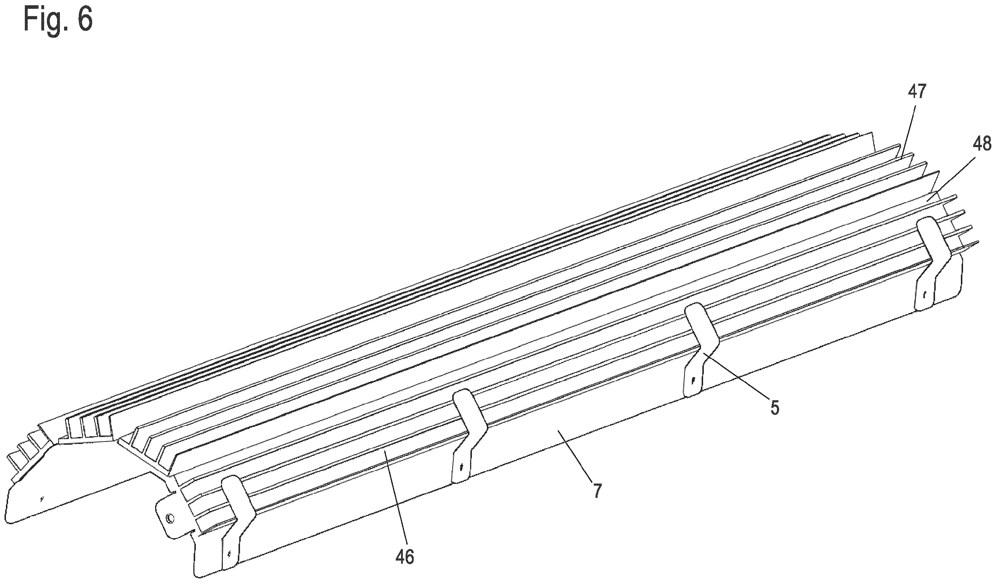

Einige Beispiele für solche austauschbare Abscheidemedien sind in Fig. 3-6 dargestellt.

Fig. 3 zeigt eine Fixierung einer Platte als Abscheidemedium 16 aus einer Vielzahl, vorzugsweise mehr als 20, besonders bevorzugt mehr als 40, nebeneinander geordneten lochförmigen Zellen 17, welche nachfolgend auch als Waben bezeichnet werden.

Die Platte weist eine Dicke von vorzugsweise mehr als 3 mm auf. Die Zellen sind endständig geschlossen, z.B. Sacklöcher, was eine große Ansammlung von Farb- und Lackresten ermöglicht.

Die Platte 16 kann aus Karton gefertigt sein, wodurch ein besonders hoher Abscheidegrad erzielbar ist. Alternativ kann die Platte 16 auch aus Metall gefertigt sein, so dass diese pyrolysierbar ist.

Der minimale Abstand zwischen den Zellen 17 der Platte kann weniger als 1mm betragen. Dieser minimale Abstand definiert zugleich die Wandstärke.

Die Platte kann aus einem elastischen Material gefertigt sein.

Alternativ oder zusätzlich kann die Platte auch bogenförmig ausgebildet sein, so dass die Auflagefläche der Platte 16 an die Außenkontur des Stützkörpers 7 angepasst ist. Dies kann beispielsweise durch Knickstellen 18 erfolgen, welche auf die Knickstellen 15 des Stützkörpers abgestimmt sind. Die Platte 16 liegt lose auf den Stützkörper 7 auf und wird durch die Haltemittel 3 auf dem Stützkörper gehalten, bzw. gegen den Stützkörper 7 gepresst und dadurch verklemmt.

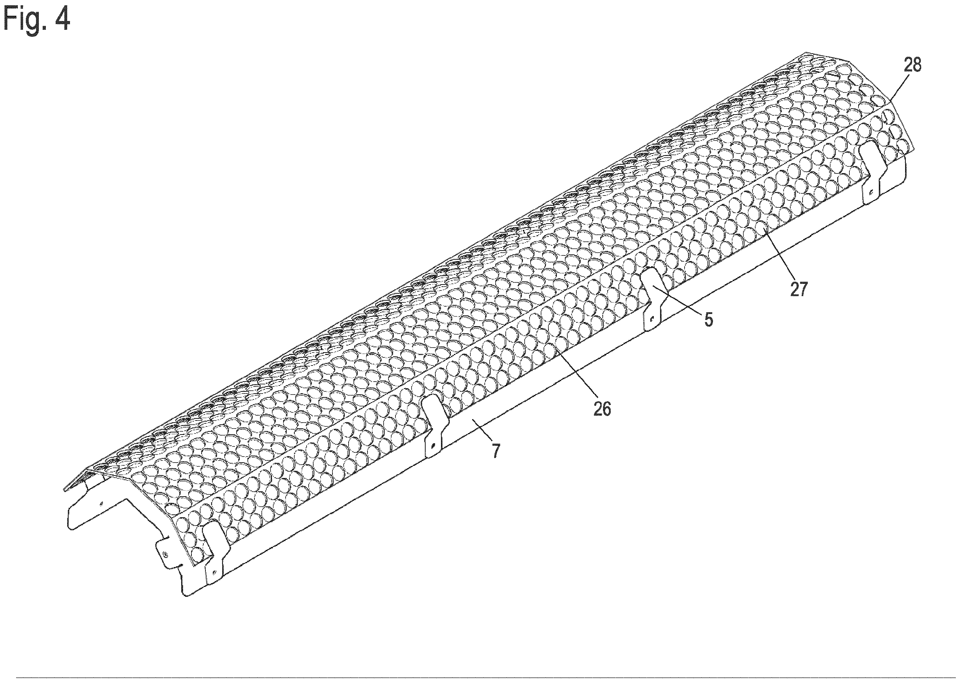

Fig. 4 zeigt eine Variante eines Abscheidemediums 26 als eine Platte mit einer Dicke von vorzugsweise weniger als 2 mm aus einem Karton oder Lochblech mit Zellen 27, vorzugsweise mehr als 20, besonders vorzugsweise mehr als 40, die als Durchgangsöffnungen, z.B. offenen Löchern, ausgebildet ist. In dieser Variante wird mehr Farbe abgeschieden als bei glatter Oberfläche, allerdings nicht so viel wie bei der endständig geschlossenen Variante der Fig. 3. Diese Variante ist allerdings einfacher reinigbar z.B. durch Verfahren wie eine Pyrolyse. Auch diese Platte 26 ist auf die Kontur des Stützkorpus, vorzugsweise durch Knickstellen 28, angepasst. Die Halterung erfolgt analog zu Fig. 3 über Haltemittel 5.

Alternativ zu den dargestellten Ausführungsvarianten kann auch das Abscheidemedium Haltemittel, vorzugsweise Spannmittel, aufweisen. Beispielsweise kann ein Abscheidemedium randseitig Halteelemente aufweisen. Ein solches Haltemittel kann z.B. als ein elastisches randseitiges Band ausgebildet sein. Dadurch kann das Abscheidemedium analog wie ein Spannbettlaken über den Stützkorpus gespannt werden.

### Bezugszeichen

- 1: Filtermodul
- 2: Zuströmöffnung
- 3: Haltemittel
- 4: Haltemittel
- 5: Haltemittel
- 6: Filterelement
- 7: Stützkorpus
- 8: Gehäusekasten
- 9: Haltemittel
- 10: Auflagefläche
- 11: Verbindungsfläche
- 12: Klemmfläche
- 13: Verbindungslaschen
- 14: Anlagefläche
- 15: Knickstelle
- 16: Abscheidemedium
- 17: Zellen
- 18: Knickstellen
- 26: Abscheidemedium
- 27: Zellen
- 28: Knickstellen
- 36: Abscheidemedium
- 38: Knickstellen
- 46: Abscheidemedium
- 47: Längsrippen
- 48: Teilplatten

## Patentansprüche

1. Filtermodul (1) zur Abscheidung von Lack- und/oder Farbresten, insbesondere von Overspray in einer Lackierkabine mit einer in einem Gehäusekasten (7) angeordneten Zuströmöffnung (2) und einer Abströmöffnung und einer im Gehäusekasten (7) angeordneten Filteranordnung (4) umfassend eine Mehrzahl von Filterelementen (6) zur Abscheidung der Lack- und/oder Farbresten **dadurch gekennzeichnet, dass** eines oder mehrere der Filterelemente (6) einen säulenförmigen oder rinnenförmigen Stützkorpus (7) und ein Abscheidemedium (16, 26, 36, 46) aufweist, wobei das Abscheidemedium (16, 26, 36, 46) kraft- und/oder formschlüssig am Stützkorpus (7) festgelegt ist,
wobei die Abscheideoberfläche des Abscheidemediums (16, 26) mit der ersten Vielzahl aus zumindest 20 nebeneinander angeordneten Zellen (17, 27) als formgleiche Zellen ausgebildet sind und
wobei die Zellen (17, 27) unmittelbar benachbart zueinander angeordnet sind und mit einer Zellwand von kleiner als 2 mm voneinander getrennt sind.

2. Filtermodul nach Anspruch 1, **dadurch gekennzeichnet, dass** das Abscheidemedium (16, 26, 36, 46) austauschbar am Stützkorpus (7) festgelegt ist.

3. Filtermodul nach Anspruch 1 oder 2, **dadurch gekennzeichnet, dass** das Abscheidemedium (16, 26, 36, 46) durch eines oder mehrere Haltemittel (3, 4, 5, 9) am Stützkorpus (7) verklemmt oder auf dem Stützkorpus (7) aufgespannt angeordnet ist.

4. Filtermodul nach einem der vorhergehenden Ansprüche, **dadurch gekennzeichnet, dass** das oder die Haltemittel (3, 4, 5, 9) durch mechanische Fixationsmittel und/oder durch stoffschlüssige Verbindung als Teil des Stützkorpus (7) ausgebildet sind.

5. Filtermodul nach einem der vorhergehenden Ansprüche, **dadurch gekennzeichnet, dass** das oder die Haltemittel (3, 4, 5, 9) am Abscheidemedium (16, 26, 36, 46) als Teil des Abscheidemediums ausgebildet sind.

6. Filtermodul nach einem der vorhergehenden Ansprüche, **dadurch gekennzeichnet, dass** die Zellen der Abscheideoberfläche des Abscheidemediums (16, 26, 36, 46) mit einer Bodenfläche abgeschlossen sind.

7. Filtermodul nach einem der vorhergehenden Ansprüche, **dadurch gekennzeichnet, dass** Abscheideoberfläche des Abscheidemediums (16, 26) mit der ersten Vielzahl aus mehr als 40, nebeneinander angeordneten Zellen (17, 27) als formgleiche Zellen, vorzugsweise mit jeweils gleich großen Hohlräumen, ausgebildet sind.

8. Filtermodul nach einem der vorhergehenden Ansprüche, **dadurch gekennzeichnet, dass** im Filtermodul (1) entlang einer Ebene parallel zur Ebene der Zuströmöffnung (2) mehrere der Filterelemente (6) nebeneinander angeordnet sind.

9. Filtermodul nach einem der vorhergehenden Ansprüche, **dadurch gekennzeichnet, dass** im Filtermodul (1) in Hauptzuströmrichtung, insbesondere senkrecht zu der Ebene der Zuströmöffnung (2), mehrere der Filterelemente (6) hintereinander angeordnet sind.

10. Filtermodul nach einem der vorhergehenden Ansprüche, **dadurch gekennzeichnet, dass** die Zellen (17, 27) der Vielzahl von Zellen eine durchschnittliche Zelltiefe, also einen durchschnittlichen Abstand zwischen Zellrand bis zur Bodenfläche, von mehr als 1 mm, vorzugsweise mehr als 2 mm, besonders bevorzugt 2,3 - 20 mm, aufweisen.

11. Filtermodul nach einem der vorhergehenden Ansprüche, **dadurch gekennzeichnet, dass** die Zellen (17, 27) unmittelbar benachbart zueinander angeordnet sind und mit einer Zellwand von kleiner als 1 mm voneinander getrennt sind.

12. Filtermodul nach einem der vorhergehenden Ansprüche, **dadurch gekennzeichnet, dass** das Abscheidemedium (16, 26, 36, 46) verklemmt in einem Zwischenraum zwischen einer Klemmfläche (12) und einer Oberfläche des Stützkorpus (7) gehalten wird.

13. Filtermodul nach einem der vorhergehenden Ansprüche, **dadurch gekennzeichnet, dass** der Stützkorpus (7) aus Metall ausgebildet ist.

14. Filtermodul nach einem der vorhergehenden Ansprüche, **dadurch gekennzeichnet, dass** das Abscheidemedium (16, 26, 36, 46) aus einem pyrolysierbaren Material, insbesondere aus einem faserhaltigen Material und/oder Cellulosematerial, ausgebildet ist.

15. Filtermodul nach einem der vorhergehenden Ansprüche, **dadurch gekennzeichnet, dass** das Abscheidemedium (16, 26, 36, 46) aus einem pyrolysefesten Material, vorzugsweise aus einem Metall, besonders bevorzugt aus Stahlblech, gefertigt ist.
